# EUROPÄISCHE PATENTSCHRIFT

(11) **EP 3 640 754 B1**
(45) Veröffentlichungstag und Bekanntmachung des Hinweises auf die Patenterteilung: **15.12.2021**
(21) Anmeldenummer: 19202965.0
(22) Anmeldetag: 14.10.2019
(51) Int. Cl.: G05B 19/416

(54) **VORRICHTUNG UND VERFAHREN ZUM SPANENDEN BEARBEITEN VON WERKSTÜCKEN**
DEVICE AND METHOD FOR MACHINING WORKPIECES
DISPOSITIF ET PROCÉDÉ D'USINAGE DE PIÈCES

(30) Priorität: 15.10.2018 DE 102018125418
(43) Veröffentlichungstag der Anmeldung: 22.04.2020
(73) Patentinhaber: HOMAG GmbH, 72296 Schopfloch (DE)
(72) Erfinder: Gan, Yimin, 72108 Rottenburg am Neckar (DE); Fritz, Marcus, 72280 Dornstetten (DE)
(74) Vertreter: Hoffmann Eitle

(56) Entgegenhaltungen:
- DE-U1- 20 111 445
- US-A- 3 784 798
- US-A1- 2018 032 054

## Beschreibung

### Technisches Gebiet

Die Erfindung betrifft eine Vorrichtung und ein Verfahren zum spanenden Bearbeiten von Werkstücken, die zumindest abschnittsweise aus Holz, Holzwerkstoffen, Kunststoff oder dergleichen bestehen, nach dem Oberbegriff von Anspruch 1, sowie ein entsprechendes Verfahren.

### Stand der Technik

Bearbeitungsvorrichtungen der eingangs genannten Art werden im Bereich der Möbel- und Bauelementeindustrie verwendet, um Werkstücke spanend zu bearbeiten, beispielsweise zu sägen, zu fräsen, zu bohren oder dergleichen. Aufgrund des auf Holz basierten Werkstoffs unterscheiden sich die dabei angewendeten Techniken und Herangehensweisen grundlegend von anderen technischen Gebieten, wie beispielsweise der Metallbearbeitung.

So offenbart beispielsweise die EP 1 995 559 A1 eine gattungsgemäße Bearbeitungsvorrichtung, die sich in der Praxis bewährt hat. Allerdings besteht zunehmend die Anforderung, Bearbeitungsvorrichtungen sowohl im Hinblick auf den Arbeitsschutz als auch im Hinblick auf den Umweltschutz weiter zu verbessern.

Ferner offenbart die DE 201 11 445 U1 eine Fräsmaschine für Holz und Holzwerkstoffe mit einer Drehzahl-geregelten Frässpindel. Die US 3,684,798 A offenbart ein Verfahren und eine Vorrichtung zum adaptiven Regeln einer Werkzeugmaschine. Die US 2018/032 054 A1 offenbart eine Anzeigevorrichtung für einen Bearbeitungsstatus.

### Darstellung der Erfindung

Vor diesem Hintergrund liegt der Erfindung das mit technischen Mitteln zu lösende Problem zugrunde, eine gattungsgemäße Vorrichtung und ein gattungsgemäßes Verfahren bereitzustellen, die eine geringere Beeinträchtigung von Bedienpersonen und verbesserte ökologische Eigenschaften besitzen.

Diese Aufgabe wird erfindungsgemäß durch eine Bearbeitungsvorrichtung nach Anspruch 1 sowie ein Bearbeitungsverfahren nach Anspruch 9 gelöst. Besonders bevorzugte Weiterbildungen der Erfindung sind in den abhängigen Ansprüchen angegeben.

Der Erfindung liegt der Gedanke zugrunde, den Betrieb der Bearbeitungsvorrichtung präziser als bisher auf die jeweiligen Anforderungen des Bearbeitungsprozesses abzustimmen. Zu diesem Zweck ist erfindungsgemäß eine Vorrichtung nach Anspruch 1 vorgesehen.

Durch die erfindungsgemäße Ausgestaltung wird es möglich, den im Bereich der Holzbearbeitung seit jeher beschrittenen Pfad zu verlassen, bei welchem die Drehzahl der Drehantriebseinrichtung standardmäßig auf die maximale Drehzahl eingestellt wurde, sofern überhaupt eine Einstellung der Drehzahl möglich war. Erfindungsgemäß können mittels der Steuereinrichtung nunmehr deutlich geringere Drehzahlen der Drehantriebseinrichtung eingestellt werden, und zwar in Abhängigkeit von den jeweiligen Betriebsparametern. Dies führt zu einer drastischen Verminderung der Lärmbelastung am Arbeitsplatz, was für die im Umfeld der Bearbeitungsmaschinen tätigen Personen ein deutliches Plus an Arbeitssicherheit, aber auch Wohlbefinden bedeutet. Gleichzeitig ergibt sich durch die Absenkung der Drehzahl eine erhebliche Energieeinsparung, wodurch der Betrieb umweltfreundlicher wird. Nicht zuletzt leistet die Absenkung der Drehzahl der Drehantriebseinrichtung auch einen Beitrag zur Erhöhung der Standzeit der Werkzeuge mit entsprechenden Vorteilen für den Betrieb der Vorrichtung und dem hiermit verbundenen Wartungsaufwand.

Dabei weist die Steuereinrichtung gemäß der Erfindung einen Prozessor auf, der eingerichtet ist, anhand ausgewählter Betriebsparameter eine minimale Drehzahl der Drehantriebseinrichtung zu berechnen. Auf diese Weise kann die Bearbeitungsvorrichtung zügig und präzise auf unterschiedlichste Parameterkombinationen und Benutzereingaben reagieren. Dabei ist es bevorzugt, dass der Prozessor auf in dem Datenspeicher gespeicherte und/oder mittels der Eingabeeinrichtung eingegebene Betriebsparameter zurückgreift, um eine präzise Steuerung der Drehantriebseinrichtung zu ermöglichen.

Gemäß einer Weiterbildung der Erfindung ist vorgesehen, dass die Betriebsparameter ausgewählt sind aus Vorschubgeschwindigkeit der Fördereinrichtung, Schnitttiefe des Bearbeitungswerkzeugs, Schnittbreite des Bearbeitungswerkzeugs, Schneidstoff des Bearbeitungswerkzeugs und Werkstoff des Werkstücks. Durch Berücksichtigung zumindest dieser Parameter lässt sich auf effektive Weise eine optimale Drehzahl der Drehantriebseinrichtung ableiten, sodass die oben genannten Vorteile wirksam erzielt werden können.

Gemäß einer Weiterbildung der Erfindung ist ferner vorgesehen, dass die Vorrichtung eine Eingabeeinrichtung für Betriebsparameter aufweist, insbesondere für die Vorschubgeschwindigkeit der Fördereinrichtung und/oder die Schnitttiefe des Bearbeitungswerkzeugs. Auf diese Weise kann eine Bedienperson auf Anforderung die jeweiligen Betriebsparameter eingeben, sofern diese nicht anderweitig zugeführt werden, beispielsweise über eine Datenschnittstelle. Hierdurch lässt sich der Prozess besonders effektiv steuern und stets die jeweils optimale Drehzahl der Drehantriebseinrichtung erreichen.

Gemäß einer Weiterbildung der Erfindung weist die Steuereinrichtung einen Datenspeicher auf, der eingerichtet ist, eine Datenbank zu speichern, in welcher Daten über Kombinationen von Betriebsparametern gespeichert sind. Hierdurch kann sichergestellt werden, dass für jede praktisch auftretende Parameterkombination ausreichende Daten und Informationen vorliegen, um auf dieser Grundlage eine effiziente Einstellung der Drehzahl der Drehantriebsvorrichtung vorzunehmen. Die Steuereinrichtung weist gemäß einer Weiterbildung der Erfindung ferner ein Drehzahlsteuermodul auf, das eingerichtet ist, die Drehzahl der Drehantriebseinrichtung zu steuern, und zwar unter Berücksichtigung der vom Prozessor berechneten minimalen Drehzahl. Hierdurch kann das vom Prozessor berechnete Ergebnis zügig und präzise an das Drehzahlsteuermodul weitergegeben werden, sodass Verzögerungen oder Störungen des Bearbeitungsbetriebs vermieden werden können, während sich gleichzeitig mit hoher Effektivität die Betriebsdrehzahl optimieren lässt.

Im Rahmen der Erfindung ist es prinzipiell möglich, für Drehzahländerungen stets die Bearbeitungsvorrichtung anzuhalten. Gemäß einer Weiterbildung der Erfindung ist jedoch vorgesehen, dass das Drehzahlsteuermodul eingerichtet ist, die Drehzahl auch während des Betriebes der Drehantriebseinrichtung zu verändern, bevorzugt auch während eines Bearbeitungsbetriebs des Bearbeitungswerkzeugs. Hierdurch lässt sich auf effektive und durchgängige Weise sicherstellen, die oben genannten Vorteile zu erreichen, insbesondere im Hinblick auf Arbeitsschutz und Energieeinsparung.

Bei dem erfindungsgemäßen Verfahren gemäß Patentanspruch 9 wird, im Unterschied zum Stand der Technik, die Drehzahl der Drehantriebseinrichtung in Abhängigkeit von mindestens einem Betriebsparameter und unter Berücksichtigung der berechneten minimalen Drehzahl auf eine Solldrehzahl eingestellt, die unterhalb der Höchstdrehzahl der Drehantriebseinrichtung liegt. Hieraus ergeben sich ebenfalls die oben genannten Vorteile, insbesondere einer geringeren Geräuschbelastung und eines verminderten Energieverbrauchs.

Ferner haben die Erfinder festgestellt, dass das Maß, um welches die Drehzahl der Drehantriebsvorrichtung gegenüber der Maximaldrehzahl abgesenkt werden kann, primär davon abhängt, welche Bearbeitungsqualität bzw. Schnittqualität erreicht werden soll. Vor diesem Hintergrund ist gemäß einer Weiterbildung der Erfindung vorgesehen, dass mittels des Prozessors unter Berücksichtigung der Betriebsparameter eine Minimaldrehzahl ermittelt wird, bei welcher eine vorbestimmte minimale Schnittqualität erreicht wird. Hierdurch lässt sich sicherstellen, dass die oben genannten Vorteile erreicht werden, ohne das Gesamtarbeitsergebnis des Prozesses zu beeinträchtigen.

Ferner kann es gemäß einer Weiterbildung von Vorteil sein, dass die Solldrehzahl mindestens 10%, bevorzugt mindestens 20% oberhalb der Minimaldrehzahl liegt. Zusätzlich kann es auch vorteilhaft sein, dass die Solldrehzahl mindestens 10%, bevorzugt mindestens 20% unterhalb der Maximaldrehzahl liegt. Hierdurch ergibt sich ein Betriebskorridor, bei dem das Lärmniveau und der Energieverbrauch auf ein akzeptables Maß gesenkt werden können, während gleichzeitig bei geringem Ausschuss eine hohe Bearbeitungsqualität erzielt werden kann.

Gemäß einer Weiterbildung der Erfindung ist ferner vorgesehen, dass als Grundlage für die Bestimmung der Minimaldrehzahl vorab mehrere Werkstücke mit unterschiedlichen Parameterkombinationen bearbeitet werden, um den Zusammenhang zumindest einiger Parameter empirisch zu bestimmen. Hierdurch ergibt sich eine präzise Grundlage für die Einstellung der Minimaldrehzahl bzw. Solldrehzahl.

Dabei ist es besonders bevorzugt, dass der empirisch ermittelte Zusammenhang zumindest einiger Parameter im Datenspeicher gespeichert wird, insbesondere in Form einer Gleichung. Auf diese Weise kann jederzeit und zügig auf die ermittelten Zusammenhänge zugegriffen werden, sodass diese unmittelbar in den Bearbeitungsprozess einfließen können, um jederzeit die grundlegenden Vorteile der verminderten Geräuschbelastung und des verminderten Energieverbrauchs zu erzielen.

### Kurze Beschreibung der Zeichnung

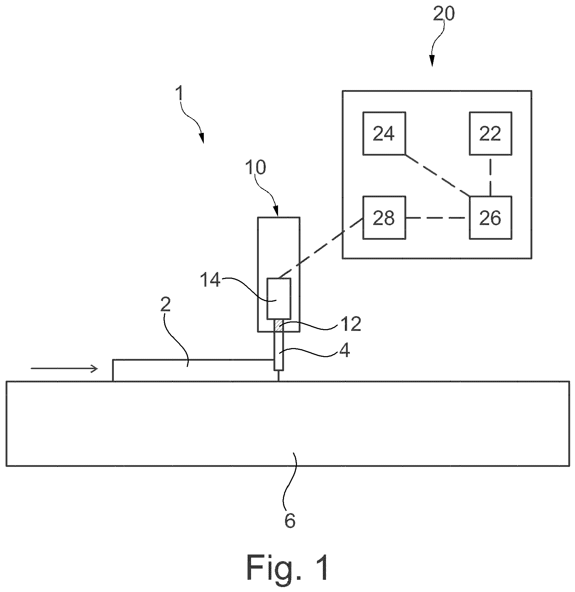

Fig. 1 zeigt schematisch den grundlegenden Aufbau einer Ausführungsform der erfindungsgemäßen Vorrichtung.

### Ausführliche Beschreibung bevorzugter Ausführungsformen

Bevorzugte Ausführungsformen der Erfindung werden nachfolgend ausführlich unter Bezugnahme auf Fig. 1 beschrieben.

Eine Bearbeitungsvorrichtung 1 zum spanenden Bearbeiten von Werkstücken 2 ist in Fig. 1 schematisch in einer teilweisen Seitenansicht dargestellt. Die Bearbeitungsvorrichtung 1 dient in der vorliegenden Ausführungsform zum Bearbeiten von Werkstücken 2, die zumindest abschnittsweise aus Holz, Holzwerkstoffen oder Kunststoff bestehen, wie sie im Bereich der Möbel- und Bauelementeindustrie verbreitet zum Einsatz kommen. So kann es sich beispielsweise um Fronten oder Korpusteile für Möbel, aber auch um Bauelemente wie Türen etc. handeln. Die Erfindung ist in dieser Hinsicht nicht besonders beschränkt, zielt jedoch primär auf die spanende Bearbeitung von Holz-basierten oder ähnlichen Materialien ab.

Zu diesem Zweck weist die Bearbeitungsvorrichtung 1 mindestens ein Bearbeitungswerkzeug 4 auf, das eingerichtet ist, die Werkstücke 2 spanend zu bearbeiten. Dementsprechend kann es sich bei dem Bearbeitungswerkzeug 4 beispielsweise um einen Bohrer, Fräser, eine Säge oder sonstige drehend angetriebene, spanabhebende Werkzeuge handeln.

Das Bearbeitungswerkzeug 4 ist in Fig. 1 in einer Aufnahme 12 einer Drehantriebseinrichtung 10 aufgenommen, die einen Drehantrieb 14 für die Aufnahme 12 aufweist. Bei der Drehantriebseinrichtung 10 kann es sich dementsprechend um eine sogenannte Spindeleinheit handeln.

Unterhalb der Drehantriebseinrichtung 10 erstreckt sich in der vorliegenden Ausführungsform eine Durchlauffördereinrichtung 6, die beispielsweise ein angetriebenes Endlosumlaufelement wie etwa eine Förderkette oder einen Förderriemen aufweist. Es ist jedoch zu beachten, dass die vorliegende Erfindung nicht auf Durchlauffördereinrichtungen beschränkt ist, sondern dass alternativ oder zusätzlich zu einer Durchlauffördereinrichtung auch andere Fördereinrichtungen zum Einsatz kommen können. So kann es sich beispielsweise auch um eine sogenannte Stationärmaschine handeln, bei welcher die Werkstücke während der Bearbeitung stationär sind und das Bearbeitungswerkzeug 4 in Bezug auf die Werkstücke 2 bewegt wird. Auch Kombinationen dieser Konzepte sind im Rahmen der vorliegenden Erfindung möglich.

Wie in Fig. 1 zu erkennen ist, weist die Bearbeitungsvorrichtung 1 ferner eine Steuereinrichtung 20 auf, die dazu dienen kann, den Betrieb der Bearbeitungsvorrichtung 1 insgesamt zu steuern. In jedem Falle ist die Steuereinrichtung 20 eingerichtet, die Drehzahl der Drehantriebseinrichtung 10 in Abhängigkeit von einem oder mehreren Betriebsparametern zu steuern.

Obwohl im Rahmen der vorliegenden Erfindung vielfältige Größen als Betriebsparameter infrage kommen, erfolgt die Einstellung der Drehzahl in der vorliegenden Ausführungsform primär anhand der Vorschubgeschwindigkeit der Fördereinrichtung, der Schnitttiefe des Bearbeitungswerkzeugs, der Schnittbreite des Bearbeitungswerkzeugs, dem Schneidstoff des Bearbeitungswerkzeugs und dem Werkstoff des Werkstücks. Bei manchen dieser Parameter handelt es sich um Größen, auf die maschinenseitig bzw. durch eine Bedienperson kein Einfluss genommen werden kann, wie beispielsweise der Werkstoff des Werkstücks.

Andere Betriebsparameter sind einer Einflussnahme durch Bedienpersonen zugänglich, sodass die Steuereinrichtung 20 zu diesem Zweck eine Eingabeeinrichtung 22 für Betriebsparameter aufweist, mittels der beispielsweise die Vorschubgeschwindigkeit der Fördereinrichtung und/oder die Schnitttiefe des Bearbeitungswerkzeugs eingestellt werden können. Sofern die für den jeweiligen Bearbeitungsvorgang benötigten Betriebsparameter nicht in der Steuereinrichtung 20 hinterlegt oder mittels der Eingabeeinrichtung 22 eingegeben werden, können diese auch über eine in Fig. 1 nicht gezeigte Schnittstelle zugeführt werden, beispielsweise im Wege einer Datenübergabe aus der Produktionsplanung.

Um für die in der Praxis auftretenden Kombinationen von Betriebsparametern jeweils die optimale bzw. minimale Drehzahl der Drehantriebseinrichtung 10 ermitteln zu können, weist die Steuereinrichtung 20 ferner einen Datenspeicher 24 auf, der eingerichtet ist, eine Datenbank zu speichern, in welcher Daten über Kombinationen von Betriebsparametern gespeichert sind. Diese Daten können beispielsweise in Form einer Tabelle (look-up-table - LUT) gespeichert sein.

Ferner umfasst die Steuereinrichtung 20, wie in Fig. 1 gezeigt, einen Prozessor 26, der eingerichtet ist, anhand ausgewählter Betriebsparameter eine minimale Drehzahl der Drehantriebseinrichtung 10 zu berechnen. Dabei greift der Prozessor 26 auf in dem Datenspeicher 24 gespeicherte und/oder mittels der Eingabeeinrichtung 22 eingegebene Betriebsparameter zurück. In dem Datenspeicher 24 sind zu diesem Zweck einerseits tatsächlich zugrunde zu legende Betriebsparameter gespeichert, andererseits aber auch (mathematische) Zusammenhänge zwischen den zugrundeliegenden Betriebsparametern einerseits und der sich hieraus ergebenden, minimalen oder sinnvollen Drehzahl der Drehantriebseinrichtung 10 andererseits.

Diese Zusammenhänge können im Rahmen der vorliegenden Erfindung vorab bestimmt werden, indem mehrere Werkstücke mit unterschiedlichen Parameterkombinationen bearbeitet werden und der sich hieraus ergebende Parameterzusammenhang empirisch bestimmt wird. Dieses Ergebnis kann dann beispielsweise in Form einer Gleichung oder auch lediglich als Zuordnungstabelle in dem Datenspeicher 24 gespeichert werden. Bei dieser Vorgehensweise kann zunächst im Zuge der Vorabversuche eine Minimaldrehzahl ermittelt werden, die sich üblicherweise dadurch ergibt, dass eine bestimmte, gewünschte Bearbeitungsqualität nicht unterschritten werden soll. Man erhält somit einen zulässigen Drehzahlbereich zwischen Minimaldrehzahl, die durch die zulässige Bearbeitungsqualität bestimmt wird, und Maximaldrehzahl, die aggregateabhängig sein kann oder ebenfalls unter Berücksichtigung der Bearbeitungsqualität abgeleitet werden kann. Innerhalb dieses zulässigen Drehzahlbereichs können dann je nach Anwendungsfall sinnvolle Bearbeitungsbereiche definiert werden, die einen stabilen, zuverlässigen und zügigen Betrieb gewährleisten. So kann beispielsweise als Solldrehzahl der logarithmische Mittelwert zwischen Minimaldrehzahl und Maximaldrehzahl gewählt werden. Auch können für die Solldrehzahl bestimmte Bereiche definiert werden, die sich als stabil und vorteilhaft bewährt haben, beispielsweise Drehzahlen, die mindestens 20 % oberhalb der Minimaldrehzahl und mindestens 20 % unterhalb der Maximaldrehzahl liegen.

Zur Weitergabe der jeweiligen Solldrehzahl an die Drehantriebseinrichtung 10 weist die Steuereinrichtung 20 ein Drehzahlsteuermodul 28 auf, das eingerichtet ist, die Drehzahl der Drehantriebseinrichtung 10 zu steuern. Zu diesem Zweck ist das Drehzahlsteuermodul 28 mit dem Prozessor 26 verbunden und erhält von diesem die berechnete minimale Drehzahl bzw. die ermittelte Solldrehzahl.

Dabei ist das Drehzahlsteuermodul 28 eingerichtet, die Drehzahl auch während des Betriebs der Drehantriebseinrichtung 10 zu verändern, und zwar bevorzugt auch während eines Bearbeitungsbetriebs des Bearbeitungswerkzeugs 4. Hierdurch kann zu jedem Zeitpunkt auf Veränderungen von Betriebsparametern reagiert werden, beispielsweise falls die Schnitttiefe aufgrund der gewünschten Werkstückkontur während des Bearbeitungsvorgangs verändert werden muss, falls die Fördergeschwindigkeit der Fördereinrichtung verändert werden soll bzw. kann, falls die Werkstückeigenschaften sich verändern (beispielsweise Übergang von Hartholzbereich zu Weichholzbereich), etc.

Somit vollzieht sich der Betrieb der erfindungsgemäßen Bearbeitungsvorrichtung 1 beispielsweise wie folgt. Sobald ein Werkstück 2 mittels der Fördereinrichtung 6 zugeführt wird, fragt der Prozessor 26 die jeweils vorliegenden bzw. gewünschten Betriebsparameter von der Eingabeeinrichtung 22 und dem Datenspeicher 24 ab. Ferner fragt der Prozessor 26 vom Datenspeicher 24 die hinterlegten Zusammenhänge ab, die für die aktuellen Parameterkombinationen gespeichert sind.

Auf dieser Grundlage ermittelt der Prozessor 26 unter Berücksichtigung der gewünschten Bearbeitungsqualität die minimale Drehzahl der Drehantriebseinrichtung 10 sowie gegebenenfalls eine Solldrehzahl, die etwas oberhalb der minimalen Drehzahl liegt.

Diesen Drehzahlwert gibt der Prozessor 26 an das Drehzahlsteuermodul 28 weiter, das auf dieser Grundlage die Drehzahl der Drehantriebseinrichtung 10 steuert. Bei dieser Drehzahl erfolgt nun die spanende Bearbeitung des Werkstücks 2 mittels des Bearbeitungswerkzeugs 4, wobei während des Bearbeitungsbetriebs auf notwendige oder gewünschte Veränderungen der Betriebsparameter reagiert und die Drehzahl der Drehantriebseinrichtung 10 durch den Prozessor 26 über das Drehzahlsteuermodul 28 jeweils angepasst werden kann.

## Patentansprüche

1. Vorrichtung (1) zum spanenden Bearbeiten von Werkstücken (2), die zumindest abschnittsweise aus Holz, Holzwerkstoffen, oder Kunststoff bestehen, umfassend:
ein Bearbeitungswerkzeug (4), das eingerichtet ist, die Werkstücke (2) spanend zu bearbeiten,
eine Drehantriebseinrichtung (10), die eine Aufnahme (12) für das Bearbeitungswerkzeug (4) und einen Drehantrieb (14) für die Aufnahme (12) aufweist, und
eine Fördereinrichtung (6) zum Herbeiführen einer Relativbewegung zwischen dem Bearbeitungswerkzeug (4) und dem Werkstück (2), und
**dadurch gekennzeichnet, dass**
die Vorrichtung eine Steuereinrichtung (20) aufweist, die einen Prozessor (26; aufweist, der eingerichtet ist, anhand ausgewählter Betriebsparameter eine minimale Drehzahl der Drehantriebseinrichtung (10) zu berechnen, bei welcher eine vorbestimmte minimale Schnittqualität erreicht wird,
die Steuereinrichtung, die eingerichtet ist, die Drehzahl der Drehantriebseinrichtung in Abhängigkeit von mindestens einem Betriebsparameter und unter Berücksichtigung der vom Prozessor berechneten minimalen Drehzahl auf eine Solldrehzahl zu steuern, die unterhalb der Höchstdrehzahl der Drehantriebseinrichtung liegt.

2. Vorrichtung nach Anspruch 1, **dadurch gekennzeichnet, dass** die Betriebsparameter ausgewählt sind aus Vorschubgeschwindigkeit der Fördereinrichtung, Schnitttiefe des Bearbeitungswerkzeugs, Schnittbreite des Bearbeitungswerkzeugs, Schneidstoff des Bearbeitungswerkzeugs und Werkstoff des Werkstücks.

3. Vorrichtung nach Anspruch 1 oder 2, **dadurch gekennzeichnet, dass** sie eine Eingabeeinrichtung (22) für Betriebsparameter, insbesondere für die Vorschubgeschwindigkeit der Fördereinrichtung und/oder die Schnitttiefe des Bearbeitungswerkzeugs, aufweist.

4. Vorrichtung nach einem der vorhergehenden Ansprüche, **dadurch gekennzeichnet, dass** die Steuereinrichtung (20) einen Datenspeicher (24) aufweist, der eingerichtet ist, eine Datenbank zu speichern, in welcher Daten über Kombinationen von Betriebsparametern gespeichert sind.

5. Vorrichtung nach Anspruch 3 oder 4 **dadurch gekennzeichnet, dass** der Prozessor (26) eingerichtet ist, auf in dem Datenspeicher (24) gespeicherte und/oder mittels der Eingabeeinrichtung (22) eingegebene Betriebsparameter zurückzugreifen.

6. Vorrichtung nach einem der vorhergehenden Ansprüche, **dadurch gekennzeichnet, dass** die Steuereinrichtung (20) ein Drehzahlsteuermodul (28) aufweist, das eingerichtet ist, die Drehzahl der Drehantriebseinrichtung (10) zu steuern, und unter Berücksichtigung der vom Prozessor (26) berechneten minimalen Drehzahl.

7. Vorrichtung nach Anspruch 6, **dadurch gekennzeichnet, dass** das Drehzahlsteuermodul (28) eingerichtet ist, die Drehzahl auch während des Betriebes der Drehantriebseinrichtung (10) zu verändern, bevorzugt auch während eines Bearbeitungsbetriebes des Bearbeitungswerkzeugs (4).

8. Vorrichtung nach einem der vorhergehenden Ansprüche, **dadurch gekennzeichnet, dass** die Fördereinrichtung (6) eine Durchlauffördereinrichtung für die Werkstücke (2) aufweist.

9. Verfahren zum spanenden Bearbeiten von Werkstücken (2), die zumindest abschnittsweise aus Holz, Holzwerkstoffen, Kunststoff bestehen, unter Einsatz einer Vorrichtung (1) nach einem der vorhergehenden Ansprüche, mit den Schritten:
Berechnen mit dem Prozessor der Vorrichtung eine minimale Drehzahl der Drehantriebseinrichtung in Abhängigkeit von ausgewählter Betriebsparameter, wobei bei der minimalen Drehzahl eine vorbestimmte minimale Schnittqualität erreicht wird;
Einstellen der Drehzahl der Drehantriebseinrichtung (10; in Abhängigkeit von mindestens einem Betriebsparameter und unter Berücksichtigung der vom Prozessor berechneten minimalen Drehzahl auf eine Solldrehzahl, die unterhalb der Höchstdrehzahl der Drehantriebseinrichtung (10) liegt,
spanendes Bearbeiten eines Werkstücks (2) mittels des Bearbeitungswerkzeugs (4).

10. Verfahren nach Anspruch 9, **dadurch gekennzeichnet, dass** die Solldrehzahl mindestens 10 %, bevorzugt mindestens 20 % oberhalb der Minimaldrehzahl und mindestens 10 %, bevorzugt mindestens 20 % unterhalb der Maximaldrehzahl liegt.

11. Verfahren nach einem der Ansprüche 9 bis 10, **dadurch gekennzeichnet, dass** als Grundlage für die Bestimmung der Minimaldrehzahl vorab mehrere Werkstücke mit unterschiedlichen Parameterkombinationen bearbeitet werden, um den Zusammenhang zumindest einiger Parameter empirisch zu bestimmen.

12. Verfahren nach Anspruch 11, **dadurch gekennzeichnet, dass** der empirisch ermittelte Zusammenhang zumindest einiger Parameter im Datenspeicher (24) gespeichert wird, insbesondere in Form einer Gleichung.

13. Verfahren nach einem der Ansprüche 9 bis 12, **dadurch gekennzeichnet, dass** die Solldrehzahl während des Betriebes der Drehantriebseinrichtung (10) verändert wird, bevorzugt auch während eines Bearbeitungsbetriebes des Bearbeitungswerkzeugs (2).

## Claims

1. Device (1) for machining workpieces (2) which consist at least partially of wood, wood-based materials or plastic, comprising:
a machining tool (4) which is configured to machine the workpieces (2),
a rotary drive device (10) which has a holder (12) for the machining tool (4) and a rotary drive (14) for the holder (12), and a conveyor device (6) for bringing about a relative movement between the machining tool (4) and the workpiece (2), and **characterised in that** the device has a control unit (20) which comprises a processor (26) which is configured to calculate, on the basis of selected operating parameters, a minimum rotational speed of the rotary drive device (10) at which a prespecified minimum cut quality is achieved,
the control unit, which is configured to regulate the rotational speed of the rotary drive device to a setpoint rotational speed, which is below the maximum rotational speed of the rotary drive device, depending on at least one operating parameter and taking into consideration the minimum rotational speed calculated by the processor.

2. Device according to claim 1, **characterised in that** the operating parameters are selected from the feed rate of the conveyor device, the cutting depth of the machining tool, the cutting width of the machining tool, the blade material of the machining tool and the material of the workpiece.

3. Device according to claim 1 or 2, **characterised in that** it has an input device (22) for operating parameters, in particular for the feed rate of the conveyor device and/or the cutting depth of the machining tool.

4. Device according to one of the preceding claims, **characterised in that** the control unit (20) has a data memory (24) which is configured to store a database in which data on combinations of operating parameters are stored.

5. Device according to claim 3 or 4, **characterised in that** the processor (26) is configured to access operating parameters stored in the data memory (24) and/or input by means of the input device (22).

6. Device according to one of the preceding claims, **characterised in that** the control unit (20) has a rotational speed control module (28) which is configured to regulate the rotational speed of the rotary drive device (10) taking into consideration the minimum rotational speed calculated by the processor (26).

7. Device according to claim 6, **characterised in that** the rotational speed control module (28) is also configured to change the rotational speed during operation of the rotary drive device (10), preferably also during a machining operation of the machining tool (4).

8. Device according to one of the preceding claims, **characterised in that** the conveyor device (6) has a throughput conveyor device for the workpieces (2).

9. Method for machining workpieces (2) which consist at least partially of wood, wood-based materials or plastic using a device (1) according to one of the preceding claims, with the steps:
calculating, with the processor of the device, a minimum rotational speed of the rotary drive device depending on selected operating parameters, wherein a predetermined minimum cut quality is achieved at the minimum rotational speed;
adjusting the rotational speed of the rotary drive device (10) depending on at least one operating parameter and taking into consideration the minimum rotational speed calculated by the processor to a setpoint rotational speed which lies below the maximum rotational speed of the rotary drive device (10),
machining a workpiece (2) by means of the machining tool (4).

10. Method according to claim 9, **characterised in that** the setpoint rotational speed lies at least 10 %, preferably at least 20 % above the minimum rotational speed and at least 10 %, preferably at least 20 % below the maximum rotational speed.

11. Method according to one of the claims 9 to 10, **characterised in that**, as a basis for determining the minimum rotational speed, a plurality of workpieces are machined beforehand with different parameter combinations in order to determine the relationship between at least a number of parameters empirically.

12. Method according to claim 11, **characterised in that** the empirically determined relationship between at least a number of parameters is stored in the data memory (24), in particular in the form of an equation.

13. Method according to one of the claims 9 to 12, **characterised in that** the setpoint rotational speed is changed during operation of the rotary drive device (10), preferably also during a machining operation of the machining tool (2).

## Revendications

1. Dispositif (1) d'usinage, par enlèvement de copeaux, de pièces (2) qui consistent au moins partiellement en du bois, des matériaux à base de bois, ou une matière plastique, comprenant :
un outil d'usinage (4) qui est conçu pour usiner les pièces (2) par enlèvement de copeaux,
un appareil d'entraînement rotatif (10), qui présente un logement (12) destiné à l'outil d'usinage (4) et un entraînement rotatif (14) destiné au logement (12), et
un appareil de convoyage (6) permettant de déclencher un mouvement relatif entre l'outil d'usinage (4) et la pièce (2), et
**caractérisé en ce que**
le dispositif présente un appareil de commande (20), qui présente un processeur (26) conçu pour, en utilisant des paramètres de fonctionnement sélectionnés, calculer une vitesse de rotation minimale de l'appareil d'entraînement rotatif (10) pour laquelle une qualité de coupe minimale prédéterminée est obtenue,
l'appareil de commande, qui est conçu pour commander la vitesse de rotation de l'appareil d'entraînement rotatif en fonction d'au moins un paramètre de fonctionnement et, en tenant compte de la vitesse de rotation minimale calculée par le processeur, l'amener à une vitesse de rotation de consigne, qui est inférieure à la vitesse de rotation maximale de l'appareil d'entraînement rotatif.

2. Dispositif selon la revendication 1, **caractérisé en ce que** les paramètres de fonctionnement sont choisis parmi la vitesse d'avance du dispositif de convoyage, la profondeur de coupe de l'outil d'usinage, la largeur de coupe de l'outil d'usinage, la matière de coupe de l'outil d'usinage et la matière de la pièce.

3. Dispositif selon la revendication 1 ou 2, **caractérisé en ce qu'**il présente un appareil de saisie (22) pour des paramètres de fonctionnement, en particulier pour la vitesse d'avance de l'appareil de convoyage et/ou la profondeur de coupe de l'outil d'usinage.

4. Dispositif selon l'une quelconque des revendications précédentes, **caractérisé en ce que** l'appareil de commande (20) présente une mémoire de données (24), qui est conçue pour stocker une base de données dans laquelle sont stockées des données concernant des combinaisons de paramètres de fonctionnement.

5. Dispositif selon la revendication 3 ou 4, **caractérisé en ce que** le processeur (26) est conçu pour accéder à des paramètres de fonctionnement stockés dans la mémoire de données (24) et/ou saisis au moyen de l'appareil de saisie (22).

6. Dispositif selon l'une quelconque des revendications précédentes, **caractérisé en ce que** l'appareil de commande (20) présente un module de commande de vitesse de rotation (28), qui est conçu pour commander la vitesse de rotation de l'appareil d'entraînement rotatif (10) en tenant compte de la vitesse de rotation minimale calculée par le processeur (26).

7. Dispositif selon la revendication 6, **caractérisé en ce que** le module de commande de vitesse de rotation (28) est conçu pour modifier la vitesse de rotation même pendant le fonctionnement de l'appareil d'entraînement rotatif (10), de préférence également pendant un fonctionnement d'usinage de l'outil d'usinage (4).

8. Dispositif selon l'une quelconque des revendications précédentes, **caractérisé en ce que** l'appareil de convoyage (6) présente un appareil de convoyage continu pour les pièces (2).

9. Procédé d'usinage, par enlèvement de copeaux, de pièces (2) qui consistent au moins partiellement en du bois, ded matériaux à base de bois, une matière plastique, à l'aide d'un dispositif (1) selon l'une quelconque des revendications précédentes, comprenant les étapes consistant à :
calculer grâce au processeur du dispositif une vitesse de rotation minimale de l'appareil d'entraînement rotatif en fonction de paramètres de fonctionnement sélectionnés, dans lequel une qualité de coupe minimale prédéterminée est obtenue pour la vitesse minimale ;
ajuster la vitesse de rotation de l'appareil d'entraînement rotatif (10), en fonction d'au moins un paramètre de fonctionnement et en tenant compte de la vitesse de rotation minimale calculée par le processeur, à une vitesse de rotation de consigne, qui est inférieure à la vitesse de rotation maximale de l'appareil d'entraînement rotatif (10),
usiner par enlèvement de copeaux une pièce (2) au moyen de l'outil d'usinage (4).

10. Procédé selon la revendication 9, **caractérisé en ce que** la vitesse de rotation de consigne est d'au moins 10 %, de préférence d'au moins 20 % supérieure à la vitesse de rotation minimale et d'au moins 10 %, de préférence d'au moins 20 % inférieure à la vitesse de rotation maximale.

11. Procédé selon l'une quelconque des revendications 9 à 10, **caractérisé en ce que** plusieurs pièces présentant différentes combinaisons de paramètres sont usinées au préalable comme base de détermination de la vitesse de rotation minimale afin de déterminer de manière empirique la relation entre au moins quelques paramètres.

12. Procédé selon la revendication 11, **caractérisé en ce que** la relation, déterminée de manière empirique, entre au moins quelques paramètres est stockée dans la mémoire de données (24), en particulier sous forme d'équation.

13. Procédé selon l'une quelconque des revendications 9 à 12, **caractérisé en ce que** la vitesse de rotation de consigne est modifiée pendant le fonctionnement de l'appareil d'entraînement rotatif (10), de préférence également pendant un fonctionnement d'usinage de l'outil d'usinage (2).
